# FASCICULE DE BREVET EUROPEEN

(11) **EP 4 134 194 B1**
(45) Date de publication et mention de la délivrance du brevet: **01.10.2025**
(21) Numéro de dépôt: 21190696.1
(22) Date de dépôt: 10.08.2021
(51) Int. Cl.: B23K 9/18, B23K 9/32, F26B 3/26, F26B 17/16, F26B 21/00, F27B 17/00

(54) **DISPOSITIF D'ETUVAGE ET DE CONSERVATION DE PULVERULENTS, TELS QUE DES FLUX DE SOUDURE OU AUTRES MATIERES**
VORRICHTUNG ZUM TROCKNEN DURCH WÄRMEEINWIRKUNG UND KONSERVIEREN VON PULVERFÖRMIGEN MATERIALIEN, WIE Z. B. LÖTFLUSSMITTEL ODER ANDERE MATERIALIEN
DEVICE FOR STERILISATION AND PRESERVATION OF POWDERY PRODUCTS, SUCH AS WELDING FLUX OR OTHER MATERIALS

(43) Date de publication de la demande: 15.02.2023
(73) Titulaire: Matair, 01560 Saint-Trivier-de-Courtes (FR)
(72) Inventeur: KOWALSKA, Hervé, 01560 Saint-Trivier-de-Courtes (FR)
(74) Mandataire: Cabinet Didier Martin

(56) Documents cités:
- DE-A1- 4 019 375
- FR-A- 1 393 578
- FR-A1- 2 536 515
- FR-A1- 3 101 003

## Description

L'invention est relative à un dispositif de module d'étuvage et de conservation de flux de soudure, ou autre pulvérulent, compatible à un dispositif de traitement de flux de soudure en un bloc compact et manutentionnable dans un atelier de chaudronnerie à l'objet de fournir un débit de pulvérulents à la tête soudure de 60 litres par heure sur 72 heures continues selon les prérogatives de soudage en environnement nucléaire, où encore utilisable en fonctionnement autonome dans différents domaines d'activités, aux fins de garantir une température de traitement homogène à l'intérieur de l'étuve à tout endroit où se place le pulvérulent de soudure.

**Etat des connaissances** : Avant que d'aborder le principe d'un module d'étuvage, il parait utile de rappeler l'environnement scientifique et technologique en matière de traitement de flux de soudure :
Relatif au flux de soudure : Ceux-ci ont un comportement physique (température supportée, variable de température à l'intérieur d'une même masse en raison de leur composition et notamment de leur granulométrie, abrasion, capacité de transport plus ou moins fragile...) très différent selon leurs compositions, ce qui contraint la conception des équipements qui les traitent. Toutefois, et aux fins d'assurer la qualité de soudure, ils doivent être composés d'un ensemble de petits éléments granulométriques additionnés à des fines. Il y a toutefois une constante de comportement observée, sur trois points :
Les flux de soudure sont tous avides d'humidité, et plus particulièrement les flux agglomérés qui sont ceux les plus utilisés. Il importe donc que les appareils qui les supportent durant le traitement- la conservation- ou le transport ne permettent aucune reprise de charge d'humidité.

Ils ont également une propriété d'isolation thermique qui contraint considérablement l'homogénéité du traitement de température, en ce que cette propriété empêche la diffusion de la température dans la masse de flux à traiter.

Ils talutent à 45 degrés, ce qui contraint également la conception des équipements, tant dans leur conception thermique (emplacements et charge de températures, dimensions des équipements mécaniques), que pour un écoulement parfait sans flux résiduel restant dans les équipements.

Dans un domaine d'application en environnement nucléaire, il est possible de mélanger du flux de soudure neuf avec du flux retraité dès lors que :
- Le flux neuf représente au moins 50% de la totalité du flux mélangé,
- Le flux retraité est exempt de laitier de taille supérieure à 2mm et a fait l'objet d'un traitement thermique systématique selon une norme en vigueur qui oblige de maintenir le flux de soudure à une température d'étuvage constante sur une durée minimum convenue, ce qui contraint les équipements de retraitement de flux à respecter le cycle indiqué.

Le flux étuvé est maintenu à une température de conservation évitant la reprise d'humidité.

Ces exigences contraignent les équipements de retraitement de flux de soudure en ce que des délais importants dus aux conditions de traitement impliquent de traiter conjointement des volumes importants de flux de soudure, volumes incompatibles avec :
- un principe de libération continue à la tête de soudage,
- un second principe de dispositif compact et mobile.

En matière d'appareils, il existe plusieurs dispositifs de retraitement de flux de soudure :
Une première technologie appelée couramment « recycleur de flux » consiste à placer au-dessus de la tête de soudage un bac qui alimente la tête de soudure. Sur ce bac un dispositif de dépression permet d'aspirer le flux excédentaire et le remettre dans le bac. Ce premier dispositif ne permet donc pas à la fois de trier en continue le flux récupéré, de mélanger du flux neuf et du flux récupéré et de traiter thermiquement ces derniers.

Reposant sur les principes de cette première technologie, une autre technologie consiste à complémenter en flux neuf le bac d'alimentation de la tête de soudage par un dispositif en pression (cf. brevet US 4 221 957). Dans ce cas comme dans le précédent, qui n'indiquent aucun système de traitement du laitier qu'il serait intellectuellement possible d'ajouter par un tamis à l'entrée du bac, il s'agirait également d'évacuer de façon périodique ce laitier, ce qui obligerait à arrêter l'aspiration, si bien que le dispositif ne peut agir en continu.

Toujours selon une variante technologique du premier dispositif, le brevet JP H06 83170 U fait état de deux bacs distincts, l'un recevant le flux récupéré selon la première technologie répertoriée, tandis que l'autre est destiné à recevoir le flux neuf. En dessous de ces deux bacs qui disposent de systèmes d'évacuation, est placé un réceptacle qui reçoit de façon aléatoire les flux libérés par phénomène de dépression, si bien que le ratio flux neuf et flux récupéré ne peut être géré.

De telle façon que ces technologies ne sont pas compatibles :
- avec les normes en vigueur dans le domaine du soudage destiné à des applications nucléaires,
- et ne peuvent prétendre à un traitement en continu des flux de soudure.

Pour permettre un traitement continu du flux de soudure selon les exigences ci avant rappelées, le présent inventeur avait conçu un dispositif de traitement de flux de soudure en un bloc compact et manutentionnable (demande de brevet N° 1800706) pour être déplacé dans un atelier de chaudronnerie à l'objet de fournir un débit de pulvérulents à la tête soudure de 60 litres par heure sur 72 heures continues selon les prérogatives de soudage en environnement nucléaire,
- intégrant les fonctions cumulées de :
   - récupération des flux de soudure excédentaire,
   - tamisage de ces derniers,
   - mélange de ces flux avec du flux neuf,
   - d'étuvage et de conservation,
   - et de libération du flux retraité vers la tête de soudage,
- recevant d'autres dispositifs brevetés par le même déposant:
   - N°1200997 du 4 avril 2012 portant sur un module d'étuvage de flux en continue à capacité illimitée destinée au séchage de produits pulvérulents,
   - N° 1400960 portant sur un module d'étuvage et de conservation de flux de soudure destiné aux installations répondant aux normes de traitement du flux de soudure en milieu nucléaire,
   - N° 1402232 d'octobre 2014 portant sur un module d'accouplement des étuves de traitement accéléré et des étuves de conservation de flux de soudure,
   - N° 1501661 d'octobre 2015 relatif à un module de transport de flux de soudure neuf/et ou recyclé à la trémie de tête de la torche de soudage, reposant sur un principe d'alimentation par plusieurs modules d'étuvage et de conservation,
   - N° 1600710 du 26 avril 2016 portant sur un module de récupération de flux de soudure,
   - N° 1700193 du 27 février 2017 portant sur un dispositif de recyclage pneumatique par aspiration mélangeant du flux de soudure neuf et du flux récupéré.

A l'issue des travaux de développement expérimental menés en 2018 qui avaient pour objet de remédier aux inconvénients du dispositif breveté sous le N° 1400960 (publié sous le N° 3020452) qui est embarqué dans l'appareil de traitement de flux de soudure en un bloc compact et manutentionnable (demande de brevet N° 1800706).

Relatif au module d'étuvage et de conservation de flux de soudure ayant fait l'objet du brevet N°1400960, celui-ci se caractérisait en ce qu'il est préalablement chauffé de façon homogène dans tout son volume à la température d'étuvage souhaitée, qu'il reçoit le déversement rapide du flux à traiter à sa température de traitement, qu'une régulation thermique et de temps associée à une sonde de niveau intervient pour déclencher le cycle - le maintenir en température - protéger les éléments chauffants et basculer la température d'étuvage en température de conservation (120° à 150°C) en fin de cycle ; le dit module étant composé de :
- D'un couvercle isolé thermiquement avec une ouverture centrale,
- D'un corps extérieur servant de structure contenant une isolation thermique et une trémie en partie intérieure,
- D'éléments chauffants installés dans la trémie, et disposés sur l'ensemble du volume de cette dernière,
- D'une série de capteurs de température de sécurité,
- De capteurs de mesure de température du flux,
- D'une régulation de température,
- D'une trappe de verrouillage et de libération bloquée par électrovanne,
- D'une sonde de niveau.

La limite du module de traitement et de conservation (brevet N°1400960) est que celui-ci reçoit du flux de soudure, qui selon qu'il soit placé ou non en proximité des éléments chauffants, va être à température de plus ou moins distante de 30% par rapport à la consigne. Cette problématique est notamment due à la conception mécanique qui est contrainte en raison du talutement du flux à 45° (propriété physique du flux de soudure) qui oblige à concevoir une sole conique à base sphérique pour libérer totalement le flux après traitement et sans résidu, et qui de fait empêche de placer les éléments chauffants de façon parfaitement répartie. En conséquence, l'emplacement et la distance entre les éléments chauffants ne permet pas d'obtenir une parfaite homogénéité de température malgré l'introduction d'une régulation thermique continue et précise. C'est pourquoi le dispositif admettait des températures importantes au-delà de 450°C, dans la limite de la température maximum admissible pour chaque flux de soudure, dans le but de diffuser les calories.

Il parait utile de rappeler les contraintes de température à observer dans le domaine de la soudure en environnement nucléaire, en ce que la consigne de température en phases de traitement et de conservation est fournie par le fabricant de flux, et supporte une différence de plus ou moins 25°C en chaque point du volume de pulvérulent traité pour les flux les plus sensibles.

Le dispositif déposé sous le numéro FR1910370 (voir aussi FR3101003A1), qui fonde la base du préambule de la revendication 1, avait pour objet de s'émanciper des contraintes de différence de température dans chaque phase de traitement : étuvage, puis conservation. Le problème posé par le dispositif mis au point en 2018 est lié à la libération du produit. Rappelons qu'en phase d'étuvage, le flux est monté dans des températures importantes (jusque 425°C), tandis qu'en phase de conservation ce flux est maintenu aux alentours de 150°C. Toutefois le flux contenu à l'intérieur de l'étuve va (du fait de sa nature) entre ces deux phases, descendre lentement de façon non homogène, en ce que le flux placé en périphérie de l'étuve abaissera sa température plus rapidement que le flux placé au centre de l'étuve. Cela pose un problème, en ce que les orientations réglementaires dans le secteur nucléaire présentent de nouvelles exigences pour une maitrise de température en tous points et en tous moments du traitement pour que le flux n'ait qu'une différence de température de plus ou moins 25°C.

Le brevet déposé en 2019 (FR1910370) était relatif à un dispositif d'étuvage et de conservation de flux de soudure cylindrique et conique, doté : d'un couvercle isolé thermiquement avec une ouverture centrale, d'un corps extérieur servant de structure contenant une isolation thermique et une trémie en partie intérieure, d'éléments chauffants installés dans la trémie, et disposés sur l'ensemble du volume de cette dernière, d'une série de capteurs de température de sécurité, de capteurs de mesure de température du flux, d'une régulation de température, d'une trappe de verrouillage et de libération bloquée par électrovanne, d'une sonde de niveau, apte à produire une température de 420°C de façon homogène sur l'ensemble de la contenance de l'étuve, à plus ou moins 25°C en tout point du volume de l'étuve recevant le flux de soudure, se caractérisant en ce que :
- Les résistances électriques chauffantes(a) sont composées de plusieurs groupes positionnés sur -au moins deux séries sur la hauteur, au moins une première série (b) dans la partie basse de l'étuve, au moins une partie (c) placée dans la partie haute de l'étuve, et éventuellement des séries placées entre ces hauteurs (d) , selon un principe d'espacement (i) maximum de 150 mm entre les résistances (a) en tout point de leur position, à raison de :
   - D'au moins deux groupes centraux (e, e") placés l'un sur l'autre,
   - D'au moins deux groupes périphériques (f, f") placés également l'un au-dessus de l'autre, reposant sur une technologie de résistances sur plaque,
   - Autant de groupes intermédiaires (g, g") placés entre les groupes centraux et périphériques,
   - Chaque groupe de résistances étant doté d'un système d'asservissement de régulation thermique (h) distincte.

Si ce brevet permettait l'obtention d'une température maintenue à plus ou moins 25°C dans chaque phase de traitement, il avait pour inconvénient d'être perturbé dès lors que l'on passe d'une phase à l'autre.

D'autre part, si le brevet FR1910370 permettait l'obtention d'une température adéquate dès lors que l'étuve était en pleine charge, dès lors qu'elle ne l'était pas, cela produisait une hétérogénéité de température du flux, en raison que des résistances électriques non entourées de flux produisaient un dérèglement de température. L'asservissement complexe permettait de remédier partiellement à la situation, en ce que cette régulation segmentée avait d'abord pour objet d'assurer un traitement homogène du flux, celui-ci étant perturbé par la forme et les dimensions de l'étuve. En revanche, cette technologie était conditionnée par la nécessité que l'étuve soit pleine dans sa phase d'étuvage. Or selon les besoins des utilisateurs, il n'est pas toujours utile que l'étuve soit utilisée à sa capacité maximum (en fin de cycle de soudage, où sur des petits chantiers, par exemple).

C'est aux fins de remédier à ces inconvénients que l'invention est destinée.

Pour parfaire l'état des connaissances dans le domaine d'étuves et de séchoirs utilisant la technologie de brassage d'air, et hors du champ d'application de flux de soudure retraité, citons les brevets :
FR 19820011593 est afférent à une chambre calorifugée (étuve) qui comprend une paroi monobloc interne, des parties latérales inclinées vers la zone centrale et des écrans de séparation perforés qui sont disposés à l'intérieur de la chambre. L'aspiration et la récupération du fluide de traitement sont réalisées par deux branches supérieures après passage d'un fluide calorifique et un autre dispositif de nettoyage par projection de liquide. Le four est utilisé dans l'industrie pharmaceutique. Le principe de ce dispositif d'étuve décrit, au plus près de notre préoccupation, est de procéder par ventilation au nettoyage de la chambre, donc sans rapport à l'objet recherché tandis que rien ne permet dans ce dispositif de garantir une température homogène.

FR2812349 fait état d'une chambre, par exemple de four- autoclave ou incubateur, selon un principe de champ magnétique faisant tourner une hélice posée sur un axe conique, l'espace restant vide à l'intérieur de la chambre. L'objet de l'invention est toujours de permettre un nettoyage facile de l'enceinte pour éviter toute contamination, mais reste sans rapport à l'objet et la technologie recherchée.

Un autre brevet français N° 1393.578 délivré le 26 mars 1965 : concerne le séchage en continue de grains ou de matières analogues. En conséquence les impératifs techniques ne sont pas du même domaine en ce que le traitement des grains et céréales ne dépasse pas 150° (risque de destruction au-delà), tandis que le traitement est continu (contrairement aux contraintes réglementaires de l'environnement nucléaire). Ce dispositif fait appel à une technologie ou le grain traité est directement en contact avec l'air brassé, ce qui est incompatible à un traitement de flux de soudure qui se caractérise par une dimension granulométrique très inférieure et disparate (notamment par la présence de fines). Dans ces conditions, un tel traitement sur du flux de soudure occasionnerait une dispersion du flux et une séparation des matières antinomique à l'objet recherché (l'efficacité de la soudure étant liée à l'amalgame de pulvérulents et de fines).

Un brevet suisse N°89099 du 2 mai 1921 : se caractérise en ce qu'une chambre reçoit un brassage d'air (présence de cornières) à l'intérieur du produit à sécher, ce qui le rend incompatible à la nature du flux de soudure pour les raisons invoquées ci-dessus. Les autres brevets relatifs aux séchoirs à grain (belge BE715 694A, US 5 884 516 A, DE4019375 dont la technologie se distingue par une technologie à vide), reposent tous sur deux caractéristiques de traitement en continue de la matière d'une part et de passage de l'air à travers le produit traité, qui sont incompatibles au traitement du flux de soudure.

L'invention concerne un dispositif d'étuvage et de conservation de pulvérulents, tels que des flux de soudure ou autres matières, apte à étuver et conserver au moins un pulvérulent en le maintenant à une température comprise dans une plage de température prédéterminée, en tous points du dispositif d'étuvage et de conservation et à tout moment d'une phase d'étuvage, d'une phase de conservation ou d'une phase intermédiaire entre les phases d'étuvage et de conservation, caractérisé en ce qu'il comprend :
- un module de brassage d'air chaud, comprenant un moteur doté d'une turbine de brassage d'air entourée d'au moins une résistance chauffante, aux fins d'extraire l'humidité contenue dans le pulvérulent par l'intermédiaire de deux circuits séparés : un circuit d'air chaud qui transporte l'air chaud au travers du volume du dispositif d'étuvage et de conservation, et un circuit de pulvérulent recevant le pulvérulent, le circuit d'air chaud et le circuit de pulvérulent étant mitoyens pour assurer un échange répartissant la charge thermique en direction du pulvérulent sans que l'air contenu dans le circuit d'air chaud rentre en contact avec le pulvérulent contenu dans le circuit de pulvérulent, le circuit d'air chaud et le circuit de pulvérulent étant également entremêlés l'un à l'autre par cloisonnements alternatifs répétés dans le volume du dispositif d'étuvage et de conservation ;
- les composants suivants :
   ∘ une enveloppe isolée thermiquement délimitant un volume d'une chambre d'étuvage du dispositif,
   ∘ un silo fixé à l'intérieur de la chambre d'étuvage de telle manière que l'air contenu dans ladite chambre d'étuvage puisse circuler dans le volume du silo, le silo comprenant :
      ▪ une base en forme d'entonnoir qui reçoit des montants, la base et les montants constituant les parois du silo et délimitant son volume,
      ▪ une vanne de vidange au bas de la base en forme d'entonnoir, le silo étant ouvert en partie haute pour recevoir le pulvérulent,
      ▪ le silo étant traversé par des tubes espacés entre eux, qui sont placés de façon parallèle sur tout le volume du silo suivant un axe de la turbine de brassage d'air, ces tubes traversant les parois du silo et formant avec le volume de la chambre d'étuvage le circuit d'air chaud, tandis que le volume restant du silo forme le circuit de pulvérulent,
   ∘ un système de contrôle par asservissement pour maintenir en température l'intérieur de la chambre et piloter les différentes phases d'étuvage et de conservation.

Selon des aspects avantageux mais non obligatoires, le dispositif peut également incorporer une ou plusieurs des caractéristiques suivantes, prises selon toute combinaison techniquement admissibles :
- Le silo est fixé en partie haute de la chambre d'étuvage de manière à assurer une étanchéité entre les circuits d'air chaud et de pulvérulent, de façon que le pulvérulent entrant dans le silo ne puisse être en contact avec l'air contenu dans le circuit d'air chaud.
- À l'intérieur du volume restant du silo formant le circuit de pulvérulent stocké pour subir le traitement, le dispositif d'étuvage et de conservation de pulvérulents comprend des cornières placées de façon parallèle aux tubes, positionnées sur l'ensemble dudit volume restant du silo, un sommet de ces cornières étant tourné vers le haut pour recevoir dans une partie inférieure de ces cornières des vapeurs d'eau dégagées par l'étuvage des pulvérulents.
- Les cornières reçoivent, sur un côté situé à l'extrémité de la chambre d'étuvage opposé à la turbine de brassage d'air, des continuités qui traversent le silo, la chambre d'étuvage et l'enveloppe aux fins de libérer naturellement hors du dispositif d'étuvage et de conservation les vapeurs d'eau.
- Les continuités comportent des conduits hermétiques au circuit d'air chaud.
- Le module de brassage d'air chaud comprend d'autres résistances chauffantes placées dans la chambre d'étuvage.
- Le dispositif d'étuvage et de conservation de pulvérulents est conçu et configuré pour étuver et conserver un pulvérulent qui est un flux de soudure destiné pour à application en environnement nucléaire, et la plage de température prédéterminée s'étend entre plus et moins 25°C autour de ladite valeur cible.

L'invention sera mieux comprise et d'autres avantages de celle-ci apparaitront plus clairement à la lumière de la description ci-dessous, faite à titre d'exemple non limitatif, en référence aux dessins dans lesquels :
- La figure 1 est une vue latérale en coupe perpendiculaire à un axe de turbine d'un module de brassage d'air d'un dispositif d'étuvage et de conservation selon l'invention ;
- La figure 2 est vue latérale en coupe parallèlement à l'axe de turbine, du dispositif de la figure 1 ;

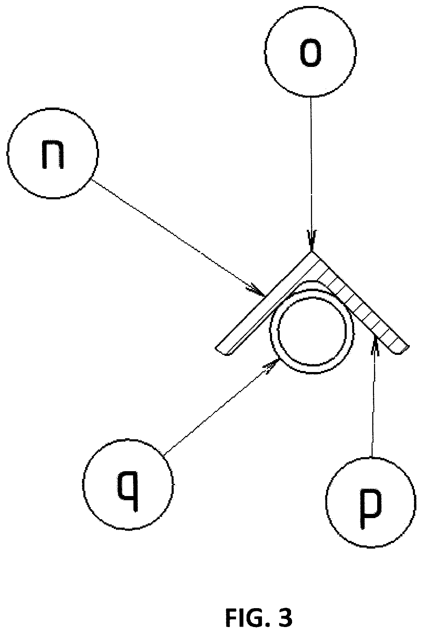

- La figure 3 est une vue détaillée en coupe d'une cornière du dispositif de la figure 1.

**Présentation de l'invention** : L'invention est relative à un dispositif d'étuvage et de conservation de pulvérulents. Par pulvérulents, on entend avantageusement des matières pulvérulentes, c'est-à-dire qui ont la consistance d'une poudre ou se réduisent facilement en poudre, tels que par exemple des flux de soudure (en particulier des matériaux d'apport de soudure) ou autres matières. Ce dispositif est apte à produire un étuvage et une conservation des pulvérulents en les maintenant à une température comprise dans une plage de température prédéterminée. Par exemple, dans le domaine des flux de soudure pour les applications en environnement nucléaire, la température du pulvérulent doit être maintenue dans une plage de plus ou moins 25°C autour d'une valeur cible prédéfinie. Cette température doit être maintenue en tous points du dispositif. En d'autres termes, les températures du pulvérulent en deux points du dispositif ne doivent pas être situées hors de la plage de température autour de la valeur cible. Pour l'exemple, pour une application à des flux de soudure en environnement nucléaire, la température en deux points distincts de la masse de pulvérulent traité ne doit généralement pas être supérieure de plus de 25°C ou inférieure de plus de 25°C à la valeur cible spécifiée pour un flux de soudure donné. Par exemple, pour une température cible de 450°C, la température du pulvérulent en tout point du volume de pulvérulent devra être comprise dans une plage de température s'étendant sensiblement entre 425°C et 475°C.

Pour d'autres environnements ou d'autres types de pulvérulents, la valeur cible et les valeurs limites de la plage de température peuvent être différentes.

La température doit être maintenue à tout moment des phases d'étuvage, par exemple telles que recommandées dans l'environnement des installations nucléaires, des phases de conservation ou des phases intermédiaires entre ces deux phases. Avantageusement, la température doit être maintenue indépendamment du fait que le dispositif soit partiellement ou totalement plein, c'est-à-dire quelle que soit la quantité de pulvérulent présent dans le dispositif.

Le dispositif comprend un module de brassage d'air chaud aux fins d'extraire l'humidité contenue dans le pulvérulent par l'intermédiaire de deux circuits séparés : un premier circuit, dit circuit d'air chaud, qui transporte l'air chaud au travers du volume du dispositif, et un second, dit circuit de pulvérulent, recevant le pulvérulent. Le pulvérulent est stocké dans un autre endroit et est ensuite acheminé vers le dispositif pour subir le traitement thermique. Ces deux circuits sont mitoyens pour assurer un échange thermique répartissant parfaitement la charge thermique en direction du pulvérulent sans que l'air contenu dans le circuit d'air chaud rentre en contact avec le pulvérulent contenu dans le circuit des pulvérulents, ces circuits étant également entremêlés l'un à l'autre par cloisonnements alternatifs répétés dans le volume de l'étuve, selon le principe d'un échangeur de chaleur.

Le module de brassage d'air chaud comprend de préférence un moteur (h) doté d'une turbine de brassage d'air (i) générant un flux d'air orienté selon un axe de cette turbine. La turbine (i) est avantageusement entourée d'au moins une résistance chauffante (j) permettant de chauffer l'air. De préférence, le module de brassage d'air chaud comprend une pluralité de résistances chauffantes.

Avantageusement, le dispositif comprend également une enveloppe (a) de préférence isolée thermiquement délimitant un volume d'une chambre d'étuvage (a') du dispositif. Par isolée thermiquement, on entend que l'enveloppe (a) présente une structure et un matériau limitant le transfert de chaleur vers l'extérieur du dispositif.

Avantageusement, le dispositif comprend également un silo (b) fixé à l'intérieur de la chambre d'étuvage (a') de telle manière que l'air (c) contenu dans ladite chambre d'étuvage (a') puisse circuler dans le volume du silo. En d'autres termes, au moins une partie du volume de la chambre d'étuvage (a') communique fluidiquement avec le volume du silo (b).

Avantageusement, le silo (b) comprend, dans son périmètre bas, c'est-à-dire dans une région inférieure du silo (b), une base (d) en forme d'entonnoir qui reçoit des montants (e), l'ensemble formé par la base (d) et les montant (e) constituant les parois du silo et délimitant son volume.

Avantageusement, le silo comprend également une vanne de vidange (f) au bas de la base (d) en forme d'entonnoir, et le silo (b) est ouvert (g) en partie haute pour recevoir le pulvérulent. L'ouverture supérieure du silo (b) est située en regard d'une ouverture de l'enveloppe (a) du dispositif.

Avantageusement, le silo est traversé par des tubes (l) espacés entre eux, qui sont placés de façon parallèle sur tout le volume du silo suivant l'axe de la turbine de brassage d'air (i), c'est à dire selon une direction horizontale, ces tubes (l) traversant les parois du silo (d, e) et formant avec le volume de la chambre d'étuvage (a') le circuit d'air chaud, tandis que le volume restant (m) du silo, c'est-à-dire le volume qui n'est pas occupé par les tubes (l), forme le circuit de pulvérulent. Le pulvérulent entoure donc les tubes (l) dans lesquels passe l'air chaud, de sorte qu'un transfert thermique a lieu entre l'air chaud et le pulvérulent. En d'autres termes, le dispositif selon l'invention comprend un échangeur thermique gaz/solide à tubes pour transférer de la chaleur d'un gaz à un solide, en l'espèce un pulvérulent.

Avantageusement, le dispositif comprend également un système de contrôle (k) par asservissement pour maintenir en température l'intérieur de la chambre d'étuvage (a') et pour piloter les différentes phases d'étuvage et de conservation des pulvérulents. A cet effet, le système de contrôle (k) est relié par des liaisons de commande non représentées au module de brassage d'air chaud et aux résistances de chauffage, ainsi qu'à d'autres composants non représentés du dispositif d'étuvage et de conservation de pulvérulents. Le système de contrôle (k) contrôle la température de la chambre d'étuvage (a') de manière que la température du pulvérulent soit comprise dans la plage de températures prédéterminée en tout point du dispositif.

Selon une variante optionnelle, le système de contrôle (k) peut également contrôler la libération des pulvérulents. Dans un tel cas, le système de contrôle (k) peut être configuré pour piloter la vanne de vidange (f).

Selon un aspect particulier, la fixation du silo (b) en partie haute de la chambre d'étuvage (a') assure une étanchéité entre le circuit d'air chaud et le circuit de pulvérulent, de façon que le pulvérulent entrant dans le silo (b) par l'ouverture (g) ne puisse être en contact avec l'air contenu dans le circuit d'air chaud. Les parois du silo (b) rejoignent l'enveloppe (a), ce qui empêche le pulvérulent de se diriger vers l'espace situé entre le silo (b) et l'enveloppe (a), c'est-à-dire la chambre d'étuvage (a') dans laquelle circule l'air chaud.

Selon un aspect particulier, à l'intérieur du volume restant (m), le dispositif comprend des cornières (n) placées de façon parallèle aux tubes (l), positionnées les unes par rapport aux autres sur l'ensemble du dit volume, le sommet (o) de ces cornières (n) étant tourné vers le haut pour recevoir dans leur partie inférieure (p) les vapeurs d'eau dégagées par l'étuvage des pulvérulents.

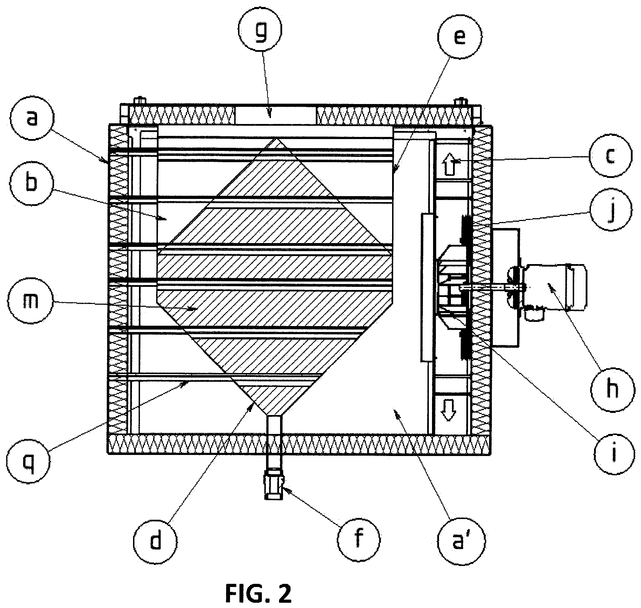

Selon un autre aspect particulier, ces cornières (n) reçoivent, sur un côté situé à l'extrémité de la chambre d'étuvage (a') opposée à la turbine de brassage d'air (i), c'est-à-dire du côté gauche de la figure 2, des continuités (q) qui traversent le silo (b), la chambre d'étuvage (a') et l'enveloppe (a) aux fins de libérer naturellement les vapeurs d'eau accumulées dans les cornières hors du dispositif. Avantageusement, ces continuités (q) sont constituées de conduits hermétiques au circuit d'air chaud, c'est-à-dire isolées fluidiquement du circuit d'air chaud.

Avantageusement, le dispositif est spécifiquement conçu et configuré (par exemple en termes de choix de matériaux) pour étuver et conserver un pulvérulent qui est un flux de soudure destiné à une application en environnement nucléaire, et la plage de température prédéterminée s'étend entre plus et moins 25°C autour de ladite valeur cible.

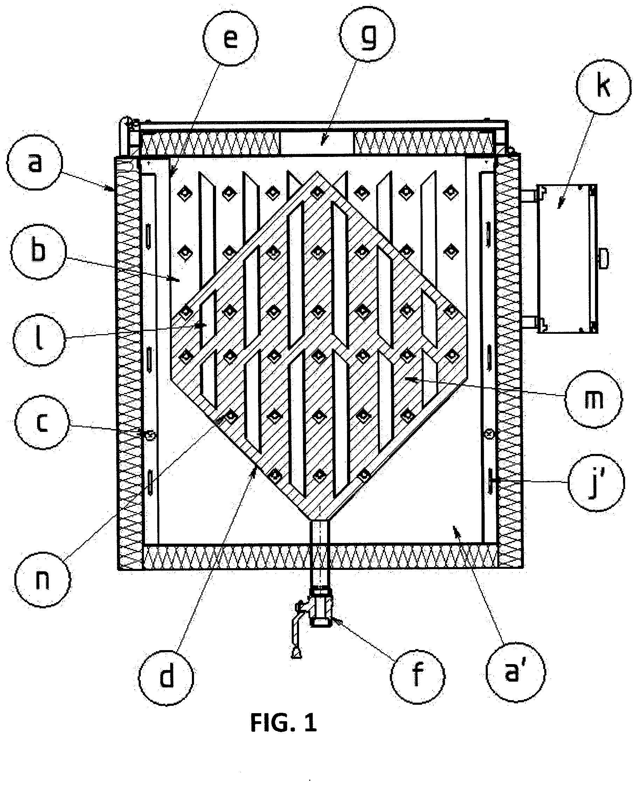

Selon un aspect optionnel particulier visible à la figure 1, d'autres résistances chauffantes (j') peuvent être placées à tout autre endroit dans la chambre d'étuvage (a'), par exemple autour du silo (b).

Ainsi grâce au dispositif d'étuvage et de conservation objet de l'invention, l'asservissement (k) gérant la température de l'air contenue dans le circuit d'air chaud, ce circuit d'air chaud traversant par les tubes (l) en de nombreux endroits le silo (b) et ses parois (d, e), l'étuvage intervient au cœur du silo sur des températures homogènes en tout espace du silo et sur l'ensemble des phases de traitement.

### Glossaire :

a) enveloppe isolée
a') chambre d'étuvage
b) silo
c) air
d) base du silo en forme d'entonnoir
e) montants du silo
f) vanne de vidange
g) ouverture en partie haute du silo
h) moteur
i) turbine de brassage d'air
j) résistance chauffantes en périphérie de la turbine
j') résistance chauffantes en tout autre endroit du volume de la chambre d'étuvage
k) asservissement
l) tubes
m) volume du silo restant après position des tubes, formant le circuit de pulvérulent stocké pour subir le traitement
n) cornières
o) haut de la cornière
p) partie inférieure de la cornière
q) continuités des cornières

## Revendications

1. - Dispositif d'étuvage et de conservation de pulvérulents, tels que des flux de soudure ou autres matières, apte à étuver et conserver au moins un pulvérulent en le maintenant à une température comprise dans une plage de température prédéterminée, en tous points du dispositif d'étuvage et de conservation et à tout moment d'une phase d'étuvage, d'une phase de conservation ou d'une phase intermédiaire entre les phases d'étuvage et de conservation, **caractérisé en ce qu'**il comprend :
- un module de brassage d'air chaud, comprenant un moteur (h) doté d'une turbine de brassage d'air (i) entourée d'au moins une résistance chauffante (j), aux fins d'extraire l'humidité contenue dans le pulvérulent par l'intermédiaire de deux circuits séparés : un circuit d'air chaud qui transporte l'air chaud au travers du volume du dispositif d'étuvage et de conservation, et un circuit de pulvérulent recevant le pulvérulent, le circuit d'air chaud et le circuit de pulvérulent étant mitoyens pour assurer un échange répartissant la charge thermique en direction du pulvérulent sans que l'air contenu dans le circuit d'air chaud rentre en contact avec le pulvérulent contenu dans le circuit de pulvérulent, le circuit d'air chaud et le circuit de pulvérulent étant également entremêlés l'un à l'autre par cloisonnements alternatifs répétés dans le volume du dispositif d'étuvage et de conservation ;
- les composants suivants :
∘ une enveloppe (a) isolée thermiquement délimitant un volume d'une chambre d'étuvage (a') du dispositif,
∘ un silo (b) fixé à l'intérieur de la chambre d'étuvage (a') de telle manière que l'air (c) contenu dans ladite chambre d'étuvage (a') puisse circuler dans le volume du silo (b), le silo (b) comprenant :
▪ une base (d) en forme d'entonnoir qui reçoit des montants (e), la base (d) et les montants (e) constituant les parois du silo et délimitant son volume,
▪ une vanne de vidange (f) au bas de la base (d) en forme d'entonnoir, le silo (b) étant ouvert (g) en partie haute pour recevoir le pulvérulent,
▪ le silo (b) étant traversé par des tubes (l) espacés entre eux, qui sont placés de façon parallèle sur tout le volume du silo suivant un axe de la turbine de brassage d'air (i), les tubes (l) traversant les parois du silo (d, e) et formant avec le volume de la chambre d'étuvage (a') le circuit d'air chaud, tandis que le volume restant (m) du silo forme le circuit de pulvérulent,
∘un système de contrôle par asservissement (k) pour maintenir en température l'intérieur de la chambre (a') et piloter les différentes phases d'étuvage et de conservation.

2. - Dispositif d'étuvage et de conservation de pulvérulents selon la revendication 1, **caractérisé en ce que** le silo (b) est fixé en partie haute de la chambre d'étuvage (a') de manière à assurer une étanchéité entre les circuits d'air chaud et de pulvérulent, de façon que le pulvérulent entrant dans le silo (b) ne puisse être en contact avec l'air contenu dans le circuit d'air chaud.

3. - Dispositif d'étuvage et de conservation de pulvérulents selon l'une des revendications précédentes, **caractérisé en ce qu'**à l'intérieur du volume restant (m) du silo formant le circuit de pulvérulent stocké pour subir le traitement, le dispositif d'étuvage et de conservation de pulvérulents comprend des cornières (n) placées de façon parallèle aux tubes (l), positionnées sur l'ensemble dudit volume restant (m) du silo, un sommet (o) de ces cornières (n) étant tourné vers le haut pour recevoir dans une partie inférieure (p) de ces cornières (n) des vapeurs d'eau dégagées par l'étuvage des pulvérulents.

4. - Dispositif d'étuvage et de conservation de pulvérulents selon la revendication 3, **caractérisé en ce que** les cornières (n) reçoivent, sur un côté situé à l'extrémité de la chambre d'étuvage (a') opposé à la turbine de brassage d'air (i), des continuités (q) qui traversent le silo (b), la chambre d'étuvage (a') et l'enveloppe (a) aux fins de libérer naturellement hors du dispositif d'étuvage et de conservation les vapeurs d'eau.

5. - Dispositif d'étuvage et de conservation de pulvérulents selon la revendication 4, **caractérisé en ce que** les continuités (q) comportent des conduits hermétiques au circuit d'air chaud.

6. - Dispositif d'étuvage et de conservation de pulvérulents selon l'une des revendications précédentes, **caractérisé en ce que** le module de brassage d'air chaud comprend d'autres résistances chauffantes (j') placées dans la chambre d'étuvage (a').

7. - Dispositif d'étuvage et de conservation de pulvérulents selon l'une des revendications précédentes, **caractérisé en ce qu'**il est conçu et configuré pour étuver et conserver un pulvérulent qui est un flux de soudure destiné pour à application en environnement nucléaire, et **en ce que** la plage de température prédéterminée s'étend entre plus et moins 25°C autour de ladite valeur cible.

## Patentansprüche

1. - Vorrichtung zum Trocknen und Aufbewahren von Pulvern, wie Lötflussmitteln oder anderen Substanzen, dazu eingerichtet, mindestens ein Pulver zu trocknen und aufzubewahren, indem sie es an allen Punkten der Vorrichtung zum Trocknen und Aufbewahren und zu jedem Zeitpunkt einer Phase der Trocknung, einer Phase der Aufbewahrung oder einer Zwischenphase zwischen den Phasen der Trocknung und der Aufbewahrung, auf einer Temperatur innerhalb eines vorbestimmten Temperaturbereichs hält, **dadurch gekennzeichnet, dass** sie umfasst:
- ein Heißluftumwälzmodul, das einen Motor (h) versehen mit einer Luftumwälzturbine (i) umfasst, die von mindestens einem Heizwiderstand (j) umgeben ist, zum Extrahieren der im Pulver enthaltenen Feuchtigkeit mittels zweier getrennter Kreisläufe: einem Kreislauf für Heißluft, der die Heißluft durch ein Volumen der Vorrichtung zum Trocknen und Aufbewahren transportiert, und einem Kreislauf für Pulver, der das Pulver aufnimmt, wobei der Kreislauf für Heißluft und der Kreislauf für Pulver aneinandergrenzen, um einen Austausch zu gewährleisten, der die thermische Beladung in Richtung des Pulvers verteilt, ohne dass die im Kreislauf für Heißluft enthaltene Luft mit dem in dem Kreislauf für Pulver enthaltenen Pulver in Kontakt kommt, wobei der Kreislauf für Heißluft und der Kreislauf für Pulver außerdem durch wiederholte, abwechselnde Unterteilungen im Volumen der Vorrichtung zum Trocknen und Aufbewahren miteinander verwoben sind,
- die folgenden Komponenten:
∘ ein wärmeisoliertes Gehäuse (a), das einen Raum einer Trockenkammer (a') der Vorrichtung begrenzt,
∘ ein Silo (b), das im Inneren der Trockenkammer (a') derart fixiert ist, dass die in der besagten Trockenkammer (a') enthaltene Luft (c) in dem Volumen des Silos (b) zirkulieren kann, wobei das Silo (b) umfasst:
■ einen trichterförmigen Boden (d), der Stützen (e) aufnimmt, wobei der Boden (d) und die Stützen (e) die Wände des Silos bilden und dessen Volumen begrenzen,
■ ein Entleerungsventil (f) unten an dem trichterförmigen Boden (d), wobei das Silo (b) im oberen Bereich offen (g) ist, um das Pulver aufzunehmen,
■ wobei das Silo (b) von voneinander beabstandeten Rohren (I) durchzogen ist, die parallel über das gesamte Volumen des Silos entlang einer Achse der Luftumwälzturbine (i) angeordnet sind, wobei die Rohre (I) die Wände des Silos (d, e) durchqueren und mit dem Volumen der Trockenkammer (a') den Kreisluft für Heißluft bilden, während das verbleibende Volumen (m) des Silos den Kreislauf für Pulvers bildet,
∘ein Regelungs- und Steuersystem (k) zum Aufrechterhalten der Temperatur im Inneren der Kammer (a') und zum Steuern der verschiedenen Phasen der Trocknung und der Aufbewahrung.

2. - Vorrichtung zum Trocknen und Aufbewahren von Pulvern gemäß Anspruch 1, **dadurch gekennzeichnet, dass** das Silo (b) derart im oberen Teil der Trockenkammer (a') befestigt ist, dass eine Abdichtung zwischen den Kreisläufen für Pulver und Heißluft gewährleistet ist, sodass das in das Silo (b) eintretende Pulver nicht mit der im Kreislauf für Heißluft enthaltenen Luft in Kontakt kommen kann.

3. - Vorrichtung zum Trocknen und Aufbewahren von Pulvern gemäß einem der vorhergehenden Ansprüche, **dadurch gekennzeichnet, dass** im Inneren des verbleibenden Volumens (m) des Silos, das den Kreislauf für Pulver, das zur Behandlung gelagert ist, bildet, dass die Vorrichtung zum Trocknen und Aufbewahren von Pulvern Winkelprofile (n) umfasst, die parallel zu den Rohren (I) angeordnet sind, die in der Gesamtheit besagten verbleibenden Volumens (m) des Silos positioniert sind, wobei eine Spitze (o) dieser Winkelprofile (n) nach oben gerichtet ist, um in einem unteren Bereich (p) dieser Winkelprofile (n) Wasserdämpfe aufzunehmen, die beim Trocknen des Pulvers freigesetzt werden.

4. - Vorrichtung zum Trocknen und Aufbewahren von Pulvern gemäß Anspruch 3, **dadurch gekennzeichnet, dass** die Winkelprofile (n) auf einer Seite, die sich am Ende der Trockenkammer (a') entgegengesetzt zu der Luftumwälzturbine (i) befindet, Fortsetzungen (q) aufweisen, die das Silo (b) durchqueren, die Trockenkammer (a') und das Gehäuse (a) durchsetzen, um Wasserdämpfe auf natürliche Weise aus der Vorrichtung zum Trocknen und Aufbewahren abzugeben.

5. - Vorrichtung zum Trocknen und Aufbewahren von Pulvern gemäß Anspruch 4, **dadurch gekennzeichnet, dass** die Fortsetzungen (q) hermetisch von dem Heißluftkreislauf abgeschlossene Leitungen aufweisen.

6. - Vorrichtung zum Trocknen und Aufbewahren von Pulvern gemäß einem der vorstehenden Ansprüche, **dadurch gekennzeichnet, dass** das Heißluftumwälzmodul weitere Heizwiderstände (j') umfasst, die in der Trockenkammer (a') angeordnet sind.

7. - Vorrichtung zum Trocknen und Aufbewahren von Pulvern gemäß einem der vorstehenden Ansprüche, **dadurch gekennzeichnet, dass** sie zum Trocknen und Aufbewahren eines Pulvers, das ein Lötflussmittel für den Einsatz in nuklearen Umgebungen ist, ausgelegt und konfiguriert ist und dass der vorbestimmte Temperaturbereich zwischen plus und minus 25 °C um den besagten Sollwert herum liegt.

## Claims

1. A device for baking and preserving powdered materials, such as solder flux or other materials, capable of baking and preserving at least one powdered material by maintaining it at a temperature comprised in a predetermined temperature range, at all points of the baking and preservation device and at any time during a baking phase, a preservation phase, or an intermediate phase between the baking and preservation phases, **characterized in that** it comprises:
- a hot air circulation module, comprising a motor (h) equipped with an air circulation turbine (i) surrounded by at least one heating resistor (j), for the purpose of extracting the moisture contained in the powdered material via two separate circuits: a hot air circuit that transports the hot air through the volume of the baking and preservation device, and a powdered material circuit receiving the powdered material, the hot air circuit and the powdered material circuit being adjacent to ensure an exchange distributing the thermal load towards the powdered material without the air contained in the hot air circuit coming into contact with the powdered material contained in the powdered material circuit, the hot air circuit and the powdered material circuit also being intermixed with each other by repeated alternating partitions within the volume of the baking and preservation device;
- the following components:
∘ a thermally insulated casing (a) delimiting a volume of a baking chamber (a') of the device,
∘ a silo (b) fixed inside the baking chamber (a') in such a way that the air (c) contained in said baking chamber (a') can circulate within the volume of the silo (b), the silo (b) comprising:
▪ a funnel-shaped base (d) which receives uprights (e), the base (d) and the uprights (e) constituting the walls of the silo and delimiting its volume,
▪ a drain valve (f) at the bottom of the funnel-shaped base (d), the silo (b) being open (g) at the top to receive the powdered material,
▪ the silo (b) being crossed by tubes (I) spaced apart from each other, which are placed parallel over the entire volume of the silo along an axis of the air mixing turbine (i), the tubes (I) passing through the walls of the silo (d, e) and forming with the volume of the baking chamber (a') the hot air circuit, while the remaining volume (m) of the silo forms the powdered material circuit,
∘ a servo-control system (k) to maintain at temperature the interior of the chamber (a') and drive the various baking and preservation phases.

2. The device for baking and preserving powdered materials according to claim 1, **characterized in that** the silo (b) is fixed in the upper part of the baking chamber (a') so as to ensure a seal between the hot air and powdered material circuits, so that the powdered material entering the silo (b) cannot come into contact with the air contained in the hot air circuit.

3. The device for baking and preserving powdered materials according to any of the preceding claims, **characterized in that** within the remaining volume (m) of the silo forming the circuit of powdered material stored to undergo treatment, the device for baking and preserving powdered materials comprises angles (n) placed parallel to the tubes (I), positioned over the entire remaining volume (m) of the silo, a top (o) of these angles (n) being turned upwards to receive in a lower part (p) of these angles (n) water vapors released by the baking of the powdered materials.

4. The device for baking and preserving powdered materials according to claim 3, **characterized in that** the angles (n) receive, on a side located at the end of the baking chamber (a') opposite the air mixing turbine (i), continuities (q) which pass through the silo (b), the baking chamber (a') and the casing (a) for the purpose of naturally releasing the water vapors from the baking and preserving device.

5. The device for baking and preserving powdered materials according to claim 4, **characterized in that** the continuities (q) include conduits sealed to the hot air circuit.

6. The device for baking and preserving powdered materials according to any of the preceding claims, **characterized in that** the hot air mixing module comprises other heating resistors (j') placed in the baking chamber (a').

7. The device for baking and preserving powdered materials according to any of the preceding claims, **characterized in that** it is designed and configured to bake and preserve a powdered material that is a solder flux intended for application in a nuclear environment, and **in that** the predetermined temperature range extends between plus and minus 25°C around said target value.
